# EUROPÄISCHE PATENTSCHRIFT

(11) **EP 3 772 072 B1**
(45) Veröffentlichungstag und Bekanntmachung des Hinweises auf die Patenterteilung: **26.01.2022**
(21) Anmeldenummer: 20187818.8
(22) Anmeldetag: 27.07.2020
(51) Int. Cl.: H01F 27/36, H01F 27/38, H01F 38/18

(54) **SPULEN-ANORDNUNG UND VORRICHTUNG ZUR DRAHTLOSEN ELEKTROMAGNETISCHEN ENERGIEÜBERTRAGUNG**
COIL ASSEMBLY AND DEVICE FOR WIRELESS ELECTROMAGNETIC ENERGY TRANSMISSION
DISPOSITIF DE BOBINE ET DISPOSITIF DE TRANSFERT D'ÉNERGIE ÉLECTROMAGNÉTIQUE SANS FIL

(30) Priorität: 31.07.2019 DE 102019211399
(43) Veröffentlichungstag der Anmeldung: 03.02.2021
(73) Patentinhaber: Würth Elektronik eiSos GmbH & Co. KG, 74638 Waldenburg (DE)
(72) Erfinder: Som, Cem, 85604 Zorneding (DE); Schaffelhofer, Christopher, 82140 Olching (DE)
(74) Vertreter: Rau, Schneck & Hübner Patentanwälte Rechtsanwälte PartGmbB

(56) Entgegenhaltungen:
- AT-A1- 515 624
- DE-A1- 19 948 454
- JP-A- 2016 063 683
- US-A- 4 939 400
- US-A1- 2010 219 183

## Beschreibung

Die Erfindung betrifft eine Spulen-Anordnung und eine Vorrichtung zur drahtlosen elektromagnetischen Energieübertragung. Ferner betrifft die Erfindung eine Bauteil-Spulen-Anordnung und ein Verfahren zur Herstellung einer derartigen Bauteil-Spulen-Anordnung.

In industriellen Anlagen ist es regelmäßig erforderlich, zwischen einem stationären Bauteil und einem drehenden Bauteil Energie zu übertragen. Beispielsweise kann es erforderlich sein, auf eine drehende Welle Energie zu übertragen, um an der Welle angeordnete Verbraucher, wie beispielsweise Sensoren, mit Energie zu versorgen. Für derartige Anwendungen hat sich die drahtlose elektromagnetische Energieübertragung bewährt.

Aus der JP 2016-63683 A ist eine Vorrichtung zur drahtlosen elektromagnetischen Energieübertragung mit einer Sendereinheit und einer Empfängereinheit bekannt. Die Empfängereinheit umfasst ein Trägerelement, an dem mehrere Spulen angeordnet und miteinander verschaltet sind. Die Empfängereinheit ist beispielsweise an der gekrümmten Oberfläche eines rotierenden Bauteils angeordnet.

Aus der DE 199 48 454 A1 ist ein Folienleiter zur Übertragung von elektrischen Signalen und/oder elektrischer Energie bekannt. Auf einer Hauptfläche des Folienleiters sind mehrere Spulen angeordnet und miteinander verbunden. Um zu einem kompakten Windungspaket zu kommen, werden die Spulen an Biegelinien jeweils um 180° abgebogen. Der Folienleiter findet beispielsweise Anwendung bei Leitungssätzen einer Tür bzw. eines Lenksäulenmoduls von Kraftfahrzeugen.

Der Erfindung liegt die Aufgabe zugrunde, eine Spulen-Anordnung zur drahtlosen elektromagnetischen Energieübertragung zu schaffen, die in einfacher und flexibler Weise für unterschiedlichste drehbare Bauteile verwendbar ist.

Diese Aufgabe wird durch eine Spulen-Anordnung mit den Merkmalen des Anspruchs 1 gelöst. Die erfindungsgemäße Spulen-Anordnung kann in einfacher und flexibler Weise mittels einer Endlos-Spulen-Anordnung bereitgestellt werden. Hierzu hat die Endlos-Spulen-Anordnung bzw. die Spulen-Anordnung einen sich in der Haupterstreckungsrichtung wiederholenden Aufbau. Die Endlos-Spulen-Anordnung bzw. die Spulen-Anordnung ist vorzugsweise modulartig aufgebaut. Die Spulen sind insbesondere auf das Trägerelement geklebt. Von der Endlos-Spulen-Anordnung kann in einfacher und flexibler Weise die erfindungsgemäße Spulen-Anordnung abgetrennt werden. Hierzu wird das Trägerelement derart, vorzugsweise zwischen zwei miteinander verbundenen Spulen, quer zu der Haupterstreckungsrichtung durchtrennt, dass das Trägerelement bzw. die Spulen-Anordnung in der Haupterstreckungsrichtung eine Länge Lu hat, die im Wesentlichen dem Umfang U des drehbaren Bauteils entspricht. Die in der Länge Lu angepasste Spulen-Anordnung kann anschließend in einfacher Weise um die Drehachse an dem Bauteil befestigt werden. Die Spulen-Anordnung kann somit zur drahtlosen elektromagnetischen Energieübertragung auf das drehende Bauteil bzw. von dem drehenden Bauteil verwendet werden.

Die Endlos-Spulen-Anordnung hat in der Haupterstreckungsrichtung eine Länge L, wobei gilt: 1 m ≤ L ≤ 200 m, insbesondere 5 m ≤ L ≤ 100 m und insbesondere 10 m ≤ L ≤ 50 m. Auf dem Trägerelement sind eine Anzahl Z von Spulen befestigt. Für die Anzahl Z gilt insbesondere: 10 < Z ≤ 2000, insbesondere 50 ≤ Z ≤ 1000 und insbesondere 100 ≤ Z ≤ 500. Das Trägerelement der Endlos-Spulen-Anordnung weist senkrecht zu der Haupterstreckungsrichtung eine Breite B auf, wobei vorzugsweise gilt: 1 ≤ L/B ≤ 1000, insbesondere 2 ≤ L/B ≤ 800 und insbesondere 4 ≤ L/B ≤ 600. Die Endlos-Spulen-Anordnung ist beispielsweise rollenförmig aufgewickelt und/oder in einer Reel-Verpackung angeordnet.

Durch die mindestens eine Soll-Trennstelle kann die Spulen-Anordnung mit einer im Wesentlichen dem Umfang eines drehenden Bauteils entsprechenden Länge Lu von der Endlos-Spulen-Anordnung abgetrennt werden. Die mindestens eine Soll-Trennstelle verläuft quer, insbesondere senkrecht zu der Haupterstreckungsrichtung. Die mindestens eine Soll-Trennstelle ist als Perforation und/oder Kerbung ausgebildet. Durch das Ferritmaterial wird in einfacher Weise eine effiziente Energieübertragung ermöglicht. Das Ferritmaterial richtet, verstärkt und/oder schirmt das magnetische Feld.

Durch das Befestigungsmittel kann die Spulen-Anordnung mittels des Trägerelements einfach an der gekrümmten Oberfläche des Bauteils befestigt werden. Geeignete Befestigungsmittel sind beispielsweise Klebstoff bzw. eine Klebstoffschicht, ein doppelseitiges Klebeband, eine Adhäsionsfolie und/oder Klettelemente.

Eine Spulen-Anordnung nach Anspruch 2 gewährleistet eine einfache und flexible Verwendung. Durch die Dicke D weist das Trägerelement einerseits eine ausreichende Verformbarkeit auf, um an einer gekrümmten Oberfläche eines drehbaren Bauteils befestigt zu werden. Andererseits gewährleistet die Dicke D eine ausreichende Stabilität zur Befestigung der Spulen an dem Trägerelement. Die Dicke D ist in einer Vertikalrichtung senkrecht zu einer Trägerelement-Oberfläche definiert.

Eine Spulen-Anordnung nach Anspruch 3 gewährleistet eine einfache und flexible Verwendung. Dadurch, dass das Trägerelement verformbar, insbesondere biegbar und/oder dehnbar, ausgebildet ist, kann das Trägerelement in einfacher und flexibler Weise an eine gekrümmte Oberfläche angepasst und dort befestigt werden. Hierdurch kann die Spulen-Anordnung einfach entlang des Umfangs eines drehenden Bauteils angeordnet werden.

Eine Spulen-Anordnung nach Anspruch 4 gewährleistet eine einfache und flexible Verwendung. Dadurch, dass die mindestens eine Soll-Trennstelle zwischen in Reihe geschalteten Spulen angeordnet ist, kann einerseits die Kontaktierung der Spulen in einfacher Weise durchtrennt werden und andererseits ein Beschädigen und Zerstören einer Spule vermieden werden.

Eine Spulen-Anordnung nach Anspruch 5 gewährleistet eine einfache und flexible Verwendung. Durch die Soll-Trennstellen kann die Länge Lu mit einem kleinen Rastermaß ΔL_{U} an den Umfang U des drehenden Bauteils angepasst werden. Über den Durchmesser der Spulen kann das Rastermaß ΔL_{U} eingestellt werden. Je kleiner das Rastermaß ΔL_{U} ist, desto genauer kann die Spulen-Anordnung in ihrer Länge Lu an den Umfang des drehenden Bauteils angepasst werden. Dadurch, dass mehrere Soll-Trennstellen in der Haupterstreckungsrichtung beabstandet sind, kann das Trägerelement zwischen jeweils in der Haupterstreckungsrichtung nacheinander angeordneten Spulen durchtrennt werden. Vorzugsweise weist das Trägerelement zwischen jeweils zwei Spulen, die in der Haupterstreckungsrichtung benachbart zueinander angeordnet sind, eine Soll-Trennstelle auf. Die jeweilige Soll-Trennstelle ist vorzugsweise zwischen in Reihe geschalteten Spulen angeordnet. Die Soll-Trennstellen verlaufen quer, insbesondere senkrecht zu der Haupterstreckungsrichtung. Die Soll-Trennstellen sind beispielsweise als Perforation und/oder Kerbung ausgebildet.

Eine Spulen-Anordnung nach Anspruch 6 gewährleistet eine einfache und flexible Verwendung. Dadurch, dass die Spulen spiralförmig gewickelt sind, sind diese als Flachspulen ausgebildet. Vorzugsweise weisen die Spulen jeweils höchstens zwei, insbesondere genau eine Wicklungsschicht auf. Die Spulen sind derart an dem Trägerelement befestigt, dass eine jeweilige Spulenachse im Wesentlichen senkrecht zu der Trägerelement-Oberfläche verläuft. Durch die spiralförmige Ausbildung der Spulen sind diese einerseits einfach und flexibel an eine gekrümmte Oberfläche eines drehbaren Bauteils anpassbar und erzeugen andererseits an dem drehenden Bauteil eine vergleichsweise geringe Unwucht.

Eine Spulen-Anordnung nach Anspruch 7 gewährleistet eine einfache und flexible Verwendung. Durch die Anordnung der zwei Anschlusskontakte der jeweiligen Spule sind die Spulen einfach und flexibel in der Haupterstreckungsrichtung nacheinander an dem Trägerelement befestigbar und miteinander verbindbar. Vorzugsweise gilt für den Winkel α: α = 90° und/oder α = 180°.

Eine Spulen-Anordnung nach Anspruch 8 gewährleistet eine einfache und flexible Verwendung. Das mindestens eine Kontaktelement ermöglicht ein einfaches Verbinden der Spulen. Das mindestens eine Kontaktelement ist aus einem elektrisch leitenden Material, insbesondere aus einem Metall ausgebildet. Das mindestens eine Kontaktelement ist an dem Trägerelement befestigt, beispielsweise verklebt. Das mindestens eine Kontaktelement ist beispielsweise als SMD-Pad ausgebildet.

Eine Spulen-Anordnung nach Anspruch 9 gewährleistet eine einfache und flexible Verwendung. Dadurch, dass die mindestens eine Soll-Trennstelle im Bereich des mindestens einen Kontaktelements verläuft, ist die Spulen-Anordnung in einfacher Weise an den Umfang eines drehenden Bauteils anpassbar und zwischen zwei miteinander verbundenen Spulen von einer Endlos-Spulen-Anordnung abtrennbar. Vorzugsweise ist zwischen jeweils zwei in Reihe geschalteten und in der Haupterstreckungsrichtung nacheinander angeordneten Spulen eine Soll-Trennstelle ausgebildet, die im Bereich eines Kontaktelements verläuft.

Eine Spulen-Anordnung nach Anspruch 10 gewährleistet eine einfache und flexible Verwendung. Vorzugsweise weisen die Kontaktbereiche senkrecht zu der Haupterstreckungsrichtung eine größere Breite als der Verbindungsbereich auf. Hierdurch stellen die Kontaktbereiche einerseits eine ausreichend große Kontaktfläche zum Kontaktieren der Spulen bereit. Andererseits ermöglicht der Verbindungsbereich ein einfaches Durchtrennen der Endlos-Spulen-Anordnung zwischen zwei miteinander verbundenen Spulen. Vorzugsweise umfasst das Trägerelement in dem jeweiligen Verbindungsbereich eine Soll-Trennstelle. Hierdurch wird ein einfaches Durchtrennen des Trägerelements und der darauf angeordneten und miteinander verbundenen Spulen ermöglicht. Vorzugsweise ist das mindestens eine Kontaktelement H-förmig ausgebildet.

Der Erfindung liegt ferner die Aufgabe zugrunde, eine Vorrichtung zur drahtlosen elektromagnetischen Energieübertragung zu schaffen, die in einfacher und flexibler Weise für unterschiedlichste drehbare Bauteile verwendbar ist.

Diese Aufgabe wird durch eine Vorrichtung mit den Merkmalen des Anspruchs 11 gelöst. Die Vorteile der erfindungsgemäßen Vorrichtung entsprechen den bereits beschriebenen Vorteilen der erfindungsgemäßen Spulen-Anordnung. Vorzugsweise umfasst die Empfängereinheit die erfindungsgemäße Spulen-Anordnung zum Empfangen von drahtlos zu einem drehbaren Bauteil übertragener Energie.

Der Erfindung liegt ferner die Aufgabe zugrunde, eine Bauteil-Spulen-Anordnung zur drahtlosen elektromagnetischen Energieübertragung zu schaffen, die in einfacher Weise herstellbar ist.

Diese Aufgabe wird durch eine Bauteil-Spulen-Anordnung mit den Merkmalen des Anspruchs 12 gelöst. Die Spulen-Anordnung kann in einfacher und flexibler Weise in ihrer Länge Lu an den Umfang des Bauteils angepasst werden. Hierdurch kann das Trägerelement in einfacher Weise an der gekrümmten Oberfläche des Bauteils derart befestigt werden, dass die Spulen um die Drehachse des Bauteils angeordnet sind. Bei einer Drehung des Bauteils wird somit in einfacher Weise eine drahtlose elektromagnetische Energieübertragung ermöglicht. Die weiteren Vorteile der erfindungsgemäßen Bauteil-Spulen-Anordnung entsprechen den bereits beschriebenen Vorteilen der erfindungsgemäßen Spulen-Anordnung.

Der Erfindung liegt ferner die Aufgabe zugrunde, ein Verfahren zu schaffen, dass in einfacher Weise die Herstellung einer Bauteil-Spulen-Anordnung ermöglicht.

Diese Aufgabe wird durch ein Verfahren mit den Schritten des Anspruchs 13 gelöst. Vorzugsweise wird zunächst eine Endlos-Spulen-Anordnung bereitgestellt. Durch Durchtrennen der Endlos-Spulen-Anordnung wird die Spulen-Anordnung mit einer den Umfang des Bauteils angepassten Länge Lu bereitgestellt. Das Trägerelement wird anschließend derart an dem Bauteil befestigt, dass die Spulen um die Drehachse angeordnet sind. Dadurch wird in einfacher Weise eine drahtlose elektromagnetische Energieübertragung ermöglicht. Die weiteren Vorteile des erfindungsgemäßen Verfahrens entsprechen den bereits beschriebenen Vorteilen der Bauteil-Spulen-Anordnung bzw. der Spulen-Anordnung.

Weitere Merkmale, Vorteile und Einzelheiten der Erfindung ergeben sich aus der nachfolgenden Beschreibung mehrerer Ausführungsbeispiele. Es zeigen:
- Fig. 1: ein Schaltplan einer Vorrichtung zur drahtlosen elektromagnetischen Energieübertragung mit einer Sendereinheit und einer Empfängereinheit,
- Fig. 2: eine perspektivische Ansicht einer Bauteil-Spulen-Anordnung mit einer Spulen-Anordnung gemäß einem ersten Ausführungsbeispiel, die an einem drehbar gelagerten Bauteil befestigt ist,
- Fig. 3: eine perspektivische Ansicht einer Endlos-Spulen-Anordnung zur Herstellung der Spulen-Anordnung,
- Fig. 4: eine vergrößerte perspektivische Ansicht der Spulen-Anordnung im Bereich eines Kontaktelements,
- Fig. 5: eine Draufsicht auf die Spulen-Anordnung,
- Fig. 6: eine seitliche Ansicht der Spulen-Anordnung,
- Fig. 7: eine Draufsicht auf eine Spulen-Anordnung gemäß einem zweiten Ausführungsbeispiel, und
- Fig. 8: eine Draufsicht auf eine Spulen-Anordnung gemäß einem dritten Ausführungsbeispiel.

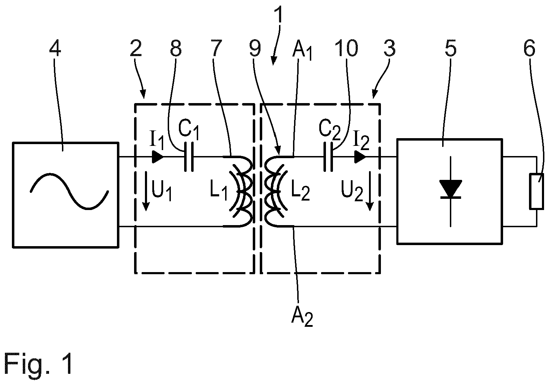

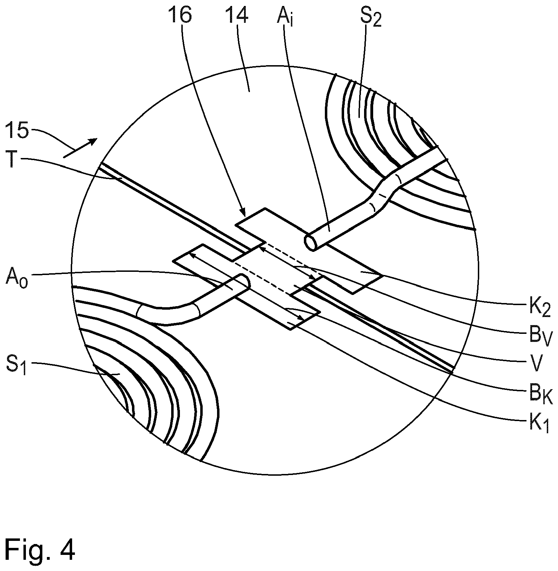

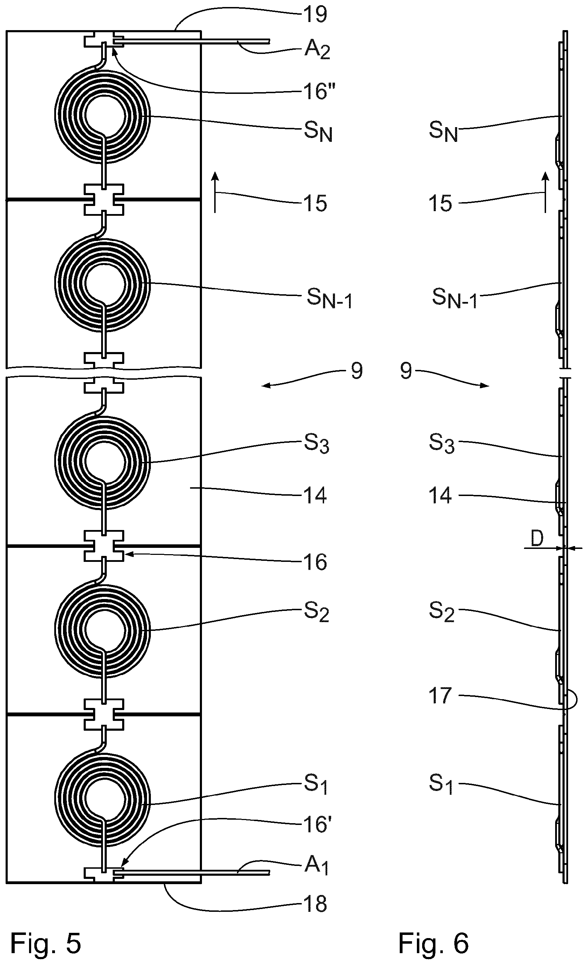

Nachfolgend ist anhand der Figuren 1 bis 6 ein erstes Ausführungsbeispiel der Erfindung beschrieben. Eine Vorrichtung 1 zur drahtlosen elektromagnetischen Energieübertragung umfasst eine Sendereinheit 2 zum Senden von drahtlos übertragbarer Energie und einer Empfängereinheit 3 zum Empfangen der drahtlos übertragenen Energie. Die Sendereinheit 2 ist an eine Energiequelle 4 angeschlossen, die eine Wechselspannung U₁ und/oder einen Wechselstrom I₁ bereitstellt. Die Empfängereinheit 3 ist an einen Gleichrichter 5 angeschlossen. Der Gleichrichter 5 richtet eine von der Empfängereinheit 3 bereitgestellte Wechselspannung U₂ und/oder einen bereitgestellten Wechselstrom I₂ gleich und versorgt einen Verbraucher 6. Der Verbraucher 6 ist beispielsweise als Messsensor ausgebildet.

Die Sendereinheit 2 umfasst eine primärseitige Spule 7, die in Reihe zu einem primärseitigen Kondensator 8 geschaltet ist. Die primärseitige Spule 7 hat eine Induktivität L₁. Der primärseitige Kondensator 8 hat eine Kapazität C₁. Die Sendereinheit 2 ist bekannt und üblich.

Die Empfängereinheit 3 umfasst eine Spulen-Anordnung 9. Die Spulen-Anordnung 9 ist somit sekundärseitig angeordnet. Die Spulen-Anordnung 9 hat eine Induktivität L₂. Die Spulen-Anordnung 9 ist in Reihe zu einem sekundärseitigen Kondensator 10 geschaltet. Der sekundärseitige Kondensator hat eine Kapazität C₂. Die Vorrichtung 1 ist in Fig. 1 veranschaulicht.

Die Spulen-Anordnung 9 ist an einem Bauteil 11 befestigt, das um eine Drehachse 12 drehbar gelagert ist. Das Bauteil 11 und die daran befestigte Spulen-Anordnung 9 bilden eine Bauteil-Spulen-Anordnung 13. Das Bauteil 11 ist wellenförmig ausgebildet und weist einen Radius R auf. Für einen Umfang U des Bauteils 11 um die Drehachse 12 gilt: U = 2·π·R, wobei π die Kreiszahl ist.

Die Spulen-Anordnung 9 umfasst ein Trägerelement 14, das bandförmig ausgebildet ist und eine Haupterstreckungsrichtung 15 definiert. An einer ersten Seite des Trägerelements 14 sind mehrere Spulen S₁ bis S_{N} und Kontaktelemente 16 befestigt, beispielsweise verklebt. Die Spulen S₁ bis S_{N} sind mittels den Kontaktelementen 16 in Reihe zueinander geschaltet. Die Kontaktelemente 16 sind aus einem elektrisch leitenden Metall, beispielsweise aus Kupfer.

Die Spulen S₁ bis S_{N} sind spiralförmig gewickelt und weisen genau eine Wicklungsschicht auf. Die Spulen S₁ bis S_{N} sind derart an dem Trägerelement 14 befestigt, dass eine jeweilige Spulenachse A_{S} senkrecht zu einer Trägerelement-Oberfläche verläuft. Die Spulen S₁ bis S_{N} weisen jeweils einen inneren Anschlusskontakt Aᵢ und einen äußeren Anschlusskontakt Aₒ auf. Die Anschlusskontakte Aᵢ und Aₒ schließen miteinander einen Winkel α ein, wobei gilt: α ≈ 180°. Die Anschlusskontakte Aᵢ und Aₒ verlaufen somit im Wesentlichen entlang einer Geraden. Die Anschlusskontakte Aᵢ und Aₒ sind mit jeweils benachbarten Kontaktelementen 16 elektrisch leitend verbunden, beispielsweise verlötet.

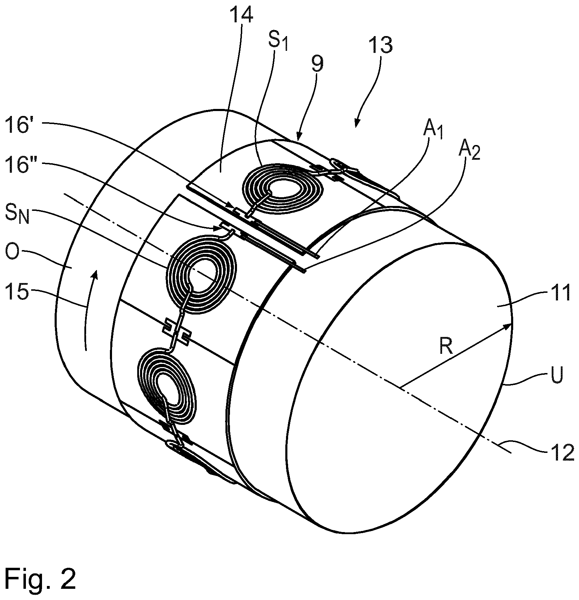

Das Trägerelement 14 weist in der Haupterstreckungsrichtung 15 eine Länge Lu, senkrecht zu der Haupterstreckungsrichtung 15 eine Breite B und senkrecht zu seiner Oberfläche eine Dicke D auf. Das Trägerelement 14 ist verformbar ausgebildet, sodass das Trägerelement 14 bzw. die Spulen-Anordnung 9 an der gekrümmten Oberfläche O des Bauteils 11 um die Drehachse 12 befestigbar ist, wie dies in Fig. 2 veranschaulicht ist. Für die Dicke D gilt vorzugsweise: 0,1 mm ≤ D ≤ 2,5 mm, insbesondere 0,5 mm ≤ D ≤ 2 mm, und insbesondere 1 mm ≤ D ≤ 1,5 mm. Das Trägerelement 14 ist beispielsweise aus einem verformbaren Ferritmaterial hergestellt. Zum Befestigen der Spulen-Anordnung 9 an dem Bauteil 11 ist an einer den Spulen S₁ bis S_{N} abgewandten Seite des Trägerelements 14 ein Befestigungsmittel 17 angeordnet. Das Befestigungsmittel 17 ist beispielsweise eine Klebstoffschicht.

Die Kontaktelemente 16 sind H-förmig ausgebildet und weisen jeweils einen ersten Kontaktbereich K₁ und einen zweiten Kontaktbereich K₂ auf, die durch einen Verbindungsbereich V miteinander verbunden sind. Die Kontaktbereiche K₁ und K₂ sind in der Haupterstreckungsrichtung 15 voneinander beabstandet. Der die Kontaktbereiche K₁ und K₂ verbindende Verbindungsbereich V weist senkrecht zu der Haupterstreckungsrichtung 15 eine Breite Bv auf, die im Vergleich zu einer Breite B_{K} der Kontaktbereiche K₁ und K₂ geringer ist.

Das Trägerelement 14 umfasst Soll-Trennstellen T, die beispielsweise als Perforation und/oder als Kerbung in dem Trägerelement 14 ausgebildet sind. Die Soll-Trennstellen T verlaufen senkrecht zu der Haupterstreckungsrichtung 15. Die Soll-Trennstellen T sind jeweils zwischen zwei der Spulen S₁ bis S_{N} in dem Verbindungsbereich V des jeweiligen Kontaktelements 16 ausgebildet. Jeweils zwei benachbarte Trennstellen T sind in der Haupterstreckungsrichtung 15 um eine Länge bzw. ein Rastermaß ΔL_{U} voneinander beabstandet.

An einem ersten Ende 18 weist die Spulen-Anordnung 9 ein Kontaktelement 16' auf, das lediglich einen Verbindungsbereich V und einen daran anschließenden Kontaktierungsbereich K₂ umfasst. An einem zweiten Ende 19 umfasst die Spulen-Anordnung 9 in entsprechender Weise ein Kontaktelement 16", das einen Verbindungsbereich V und einen daran anschließenden Kontaktbereich K₁ umfasst. Die Kontaktelemente 16', 16" entsprechen jeweils einer Hälfte eines Kontaktelements 16.

Zum elektrisch leitenden Verbinden der Spulen-Anordnung 9 mit dem sekundärseitigen Kondensator 10 und dem Gleichrichter 5 sind an die Kontaktelemente 16' und 16" jeweilige Anschlussleitungen A₁ und A₂ befestigt. Die Anschlussleitungen A₁ und A₂ sind beispielsweise mit den Kontaktelementen 16' und 16" verlötet. Die Anschlussleitungen A₁, A₂ verlaufen quer zu der Haupterstreckungsrichtung 15.

Die Spulen-Anordnung 9 ist modulartig ausgebildet. Die Spulen-Anordnung 9 umfasst Spulen-Module M₁ bis M_{N}. N bezeichnet die Anzahl der Spulen-Module, die im vorliegenden Ausführungsbeispiel identisch mit der Anzahl der Spulen S₁ bis S_{N} ist. Die Spulen-Module M₁ bis M_{N} weisen in der Haupterstreckungsrichtung 15 jeweils die Länge ΔL_{U} auf. Benachbarte Spulen-Module M₁ bis M_{N} sind durch die Soll-Trennstellen T voneinander abgegrenzt.

Für die Länge Lu gilt: Lu = N·ΔL_{U}. Die Länge Lu ist an den Umfang U des Bauteils 11 angepasst. Es gilt insbesondere: 0,8·U ≤ Lu ≤ U, insbesondere 0,9·U ≤ L_{U} ≤ 0,99·U, und insbesondere 0,95·U ≤ L_{U} ≤ 0,98·U.

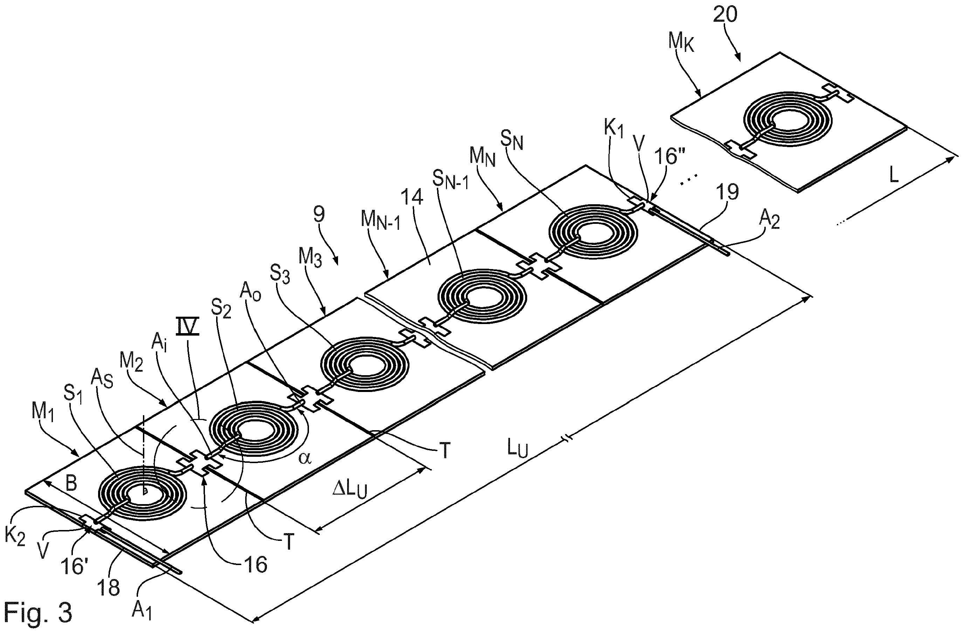

Die Herstellung der Bauteil-Spulen-Anordnung 13 ist wie folgt:
Die Spulen-Anordnung 9 wird von einer Endlos-Spulen-Anordnung 20 abgetrennt. Die Endlos-Spulen-Anordnung 20 ist in Fig. 3 veranschaulicht.
Die Endlos-Spulen-Anordnung 20 umfasst eine Vielzahl von Spulen-Modulen M₁ bis M_{K}, wobei K die Anzahl der Spulen-Module der Endlos-Spulen-Anordnung 20 bezeichnet. Für die Anzahl K gilt: K > N, insbesondere K >> N. Die Endlos-Spulen-Anordnung 20 weist in der Haupterstreckungsrichtung 15 eine Länge L auf, wobei gilt: L > Lu, insbesondere L >> Lu. Das Befestigungsmittel 17 der Endlos-Spulen-Anordnung 20 ist beispielsweise durch eine Trennschicht abgedeckt, sodass die Endlos-Spulen-Anordnung 20 als Rolle und/oder in einer Reel-Verpackung lagerbar ist.

Von der Endlos-Spulen-Anordnung 20 wird eine gewünschte Anzahl N an Spulen-Modulen abgetrennt, sodass die hierdurch entstehende Spulen-Anordnung 9 die gewünschte Länge Lu hat. Zum Abtrennen wird das Trägerelement 14 an der Soll-Trennstelle T zwischen den Spulen-Modulen M_{N} und M_{N+1} sowie das zugehörige Kontaktelement 16 durchtrennt, sodass die Spulen-Anordnung 9 die Spulen-Module M₁ bis M_{N} und das Kontaktelement 16" umfasst.

Zum Befestigen wird die Trennschicht entfernt, sodass das Befestigungsmittel 17 der Spulen-Anordnung 9 freiliegt. Die Spulen-Anordnung 9 wird anschließend an der Oberfläche O des Bauteils 11 derart befestigt, dass die in der Haupterstreckungsrichtung 15 nacheinander angeordneten Spulen S₁ bis S_{N} um die Drehachse 12 angeordnet sind. Anschließend werden die Anschlussleitungen A₁ und A₂ mit den Kontaktelementen 16' und 16" verbunden und die Anschlussleitungen A₁ und A₂ mit dem sekundärseitigen Kondensator 10 und dem Gleichrichter 5 verbunden.

Im Betrieb der Vorrichtung 1 wird mittels der stationären Sendereinheit 2 elektromagnetisch Energie zu der Empfängereinheit 3 übertragen. Durch die Bauteil-Spulen-Anordnung 13 erfolgt die Energieübertragung auf das drehende Bauteil 11 einfach und effizient. Die übertragene Energie versorgt über den Gleichrichter 5 den Verbraucher 6.

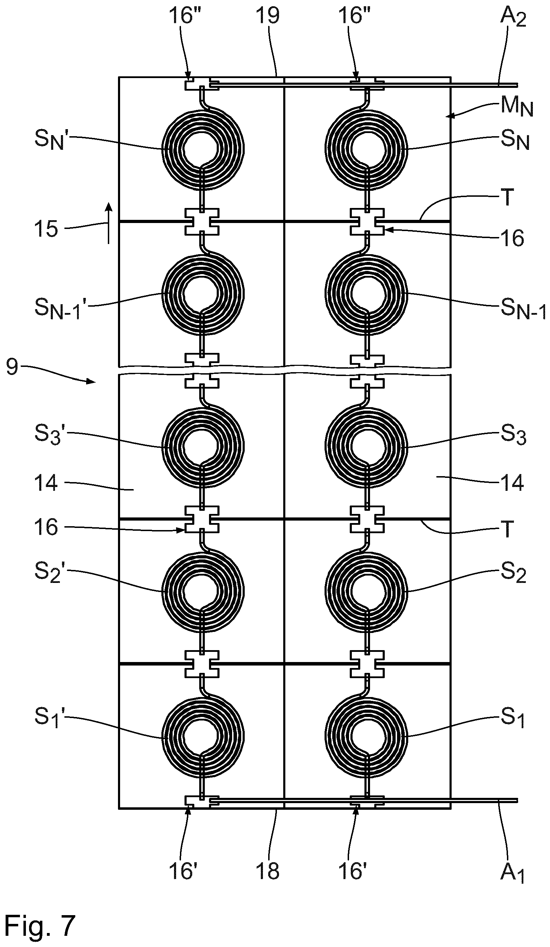

Nachfolgend ist anhand von Fig. 7 ein zweites Ausführungsbeispiel der Erfindung beschrieben. Im Unterschied zu dem vorangegangenen Ausführungsbeispiel ist die Spulen-Anordnung 9 zweireihig ausgebildet. Auf dem Trägerelement 14 sind in der Haupterstreckungsrichtung 15 nacheinander die Spulen S₁ bis S_{N} angeordnet und mittels der Kontaktelemente 16 in Reihe zueinander geschaltet. Neben den Spulen S₁ bis S_{N} sind weitere Spulen S₁' bis S_{N}' auf dem Trägerelement 14 angeordnet. Die Spulen S₁' bis S_{N}' sind in der Haupterstreckungsrichtung 15 nacheinander angeordnet und mittels Kontaktelementen 16 in Reihe geschaltet. Die durch die Soll-Trennstellen T abgegrenzten Spulen-Module M₁ bis M_{N} weisen somit jeweils zwei Spulen S₁, S₁' bis S_{N}, S_{N}' auf. An dem ersten Ende 18 sind die Spulen S₁, S₁' mittels der Kontaktelemente 16' mit der ersten Anschlussleitung A₁ verbunden. In entsprechender Weise sind die Spulen S_{N}, S_{N}' an dem zweiten Ende 19 mittels der Kontaktelemente 16" mit der zweiten Anschlussleitung A₂ verbunden. Die Reihenschaltungen der Spulen S₁ bis S_{N} und S₁' bis S_{N}' sind somit mittels den Anschlussleitungen A₁ und A₂ parallel geschaltet. Hinsichtlich des weiteren Aufbaus und der weiteren Funktionsweise sowie der Herstellung der Bauteil-Spulen-Anordnung 13 wird auf das vorangegangene Ausführungsbeispiel verwiesen.

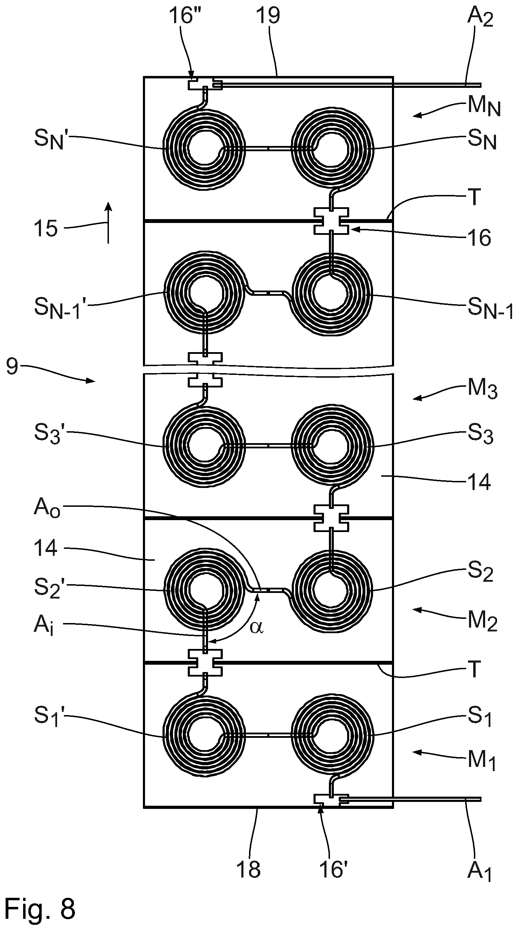

Nachfolgend ist anhand von Fig. 8 ein drittes Ausführungsbeispiel der Erfindung beschrieben. Im Unterschied zu den vorangegangenen Ausführungsbeispielen umfasst die Spulen-Anordnung 9 eine mäanderförmige Reihenschaltung von Spulen S₁, S₁' bis S_{N}, S_{N}'. Die durch die Soll-Trennstellen T abgegrenzten Spulen-Module M₁ bis M_{N} weisen somit jeweils zwei Spulen S₁, S₁' bis S_{N}, S_{N}' auf. Zur Ausbildung der mäanderförmigen Reihenschaltung gilt für den Winkel α zwischen den Anschlusskontakten Aᵢ und Aₒ: α ≈ 90°. Die Spulen S₁, S₁' bis S_{N}, S_{N}' des jeweiligen Spulen-Moduls M₁ bis M_{N} sind elektrisch leitend miteinander verbunden. Hierzu sind die Spulen S₁, S₁' bis S_{N}, S_{N}' beispielsweise aus einem gemeinsamen Draht ausgebildet und/oder mit einem gemeinsamen Kontaktelement verlötet. Die Anschlussleitungen A₁ und A₂ sind mit den Kontaktelementen 16' und 16" verbunden. Hinsichtlich des weiteren Aufbaus und der weiteren Funktionsweise sowie der Herstellung der Bauteil-Spulen-Anordnung 13 wird auf die vorangegangenen Ausführungsbeispiele verwiesen.

Allgemein gilt:
Die Vorrichtung 1 dient zur drahtlosen Energieübertragung und zur Versorgung von drehenden Bauteilen 11 mit elektrischer Energie. Hierzu wird die Spulen-Anordnung 9 an dem drehenden Bauteil 11 befestigt. Die Spulen-Anordnung 9 kann in einfacher und flexibler Weise mittels einer Endlos-Spulen-Anordnung 20 bereitgestellt werden. Die Endlos-Spulen-Anordnung 20 ist modulartig aufgebaut, sodass die Spulen-Anordnung 9 mit einer gewünschten Anzahl an Spulen-Modulen und einer gewünschten Länge durch Abtrennen von der Endlos-Spulen-Anordnung 20 bereitgestellt werden kann. Die Endlos-Spulen-Anordnung 20 bildet somit ein endloses Spulen-Array. Insbesondere durch eine Ausbildung der Spulen als Flachspulen sowie durch das verformbare Trägerelement 14 kann die Spulen-Anordnung 9 in einfacher Weise an der gekrümmten Oberfläche des drehenden Bauteils 11 befestigt werden. Über den Durchmesser der Flachspulen kann die Länge ΔL_{U} der Spulen-Module eingestellt werden. Je kleiner die Länge ΔL_{U} ist, desto genauer kann die Spulen-Anordnung 9 in ihrer Länge Lu an den Umfang des drehenden Bauteils 11 angepasst werden.
Die Spulen-Anordnung 9 kann ein- oder mehrreihig ausgebildet sein. Das Trägerelement 14 kann aus einem Ferritmaterial und/oder einem anderen flexiblen Trägermaterial hergestellt sein. Die Spulen können eine Reihenschaltung und/oder eine Parallelschaltung ausbilden.

Die Spulen-Anordnung 9 kann einfach und flexibel an drehende Bauteile 11, insbesondere drehende Wellen, in Industrieanlagen für die Signal- und/oder Energieübertragung angepasst werden. Hierdurch können Vorrichtungen 1 zur elektromagnetischen Energieübertragung in Industrieanlagen einfach und schnell repariert und Stillstandzeiten minimiert werden.

## Patentansprüche

1. Spulen-Anordnung zur drahtlosen elektromagnetischen Energieübertragung, mit
- einem Trägerelement (14), das eine Haupterstreckungsrichtung (15) ausbildet und ein Ferritmaterial umfasst, und
- mehreren Spulen (S₁ bis S_{N}; S₁ bis S_{N}, S₁' bis S_{N}'), wobei zumindest ein Teil der Spulen (S₁ bis S_{N}; S₁ bis S_{N}, S₁' bis S_{N}') in der Haupterstreckungsrichtung (15) nacheinander an dem Trägerelement (14) befestigt und miteinander verbunden sind,
**dadurch gekennzeichnet,**
**dass** an einer den Spulen (S₁ bis S_{N}; S₁ bis S_{N}, S₁' bis S_{N}') abgewandten Seite des Trägerelements (14) ein Befestigungsmittel (17) zum Befestigen an einem Bauteil (11) angeordnet ist, und
**dass** das Trägerelement (14) mindestens eine Soll-Trennstelle (T) umfasst, die als Perforation und/oder Kerbung ausgebildet ist.

2. Spulen-Anordnung nach Anspruch 1, **dadurch gekennzeichnet,**
**dass** das Trägerelement (14) eine Dicke D hat, wobei gilt: 0,1 mm ≤ D ≤ 2,5 mm, insbesondere 0,5 mm ≤ D ≤ 2 mm, und insbesondere 1 mm ≤ D ≤ 1,5 mm.

3. Spulen-Anordnung nach Anspruch 1 oder 2, **dadurch gekennzeichnet, dass** das Trägerelement (14) zum Anordnen an einer gekrümmten Oberfläche (O) eines Bauteils (11) verformbar ausgebildet ist.

4. Spulen-Anordnung nach mindestens einem der vorangegangenen Ansprüche, **dadurch gekennzeichnet,**
**dass** die mindestens eine Soll-Trennstelle (T) zwischen in Reihe geschalteten Spulen (S₁ bis S_{N}; S₁ bis S_{N}, S₁' bis S_{N}') angeordnet ist.

5. Spulen-Anordnung nach mindestens einem der vorangegangenen Ansprüche, **dadurch gekennzeichnet,**
**dass** das Trägerelement (14) mehrere Soll-Trennstellen (T) umfasst, die insbesondere in der Haupterstreckungsrichtung (15) beabstandet sind.

6. Spulen-Anordnung nach mindestens einem der vorangegangenen Ansprüche, **dadurch gekennzeichnet,**
**dass** die Spulen (S₁ bis S_{N}; S₁ bis S_{N}, S₁' bis S_{N}') spiralförmig gewickelt sind.

7. Spulen-Anordnung nach mindestens einem der vorangegangenen Ansprüche, **dadurch gekennzeichnet,**
**dass** die Spulen (S₁ bis S_{N}; S₁ bis S_{N}, S₁' bis S_{N}') jeweils zwei Anschlusskontakte (Aᵢ, Aₒ) umfassen, die um einen Winkel α versetzt zueinander angeordnet sind, wobei gilt: 60° ≤ α ≤ 300°, insbesondere 90° ≤ α ≤ 270°, und insbesondere 120° ≤ α ≤ 240°.

8. Spulen-Anordnung nach mindestens einem der vorangegangenen Ansprüche, **dadurch gekennzeichnet,**
**dass** an dem Trägerelement (14) mindestens ein Kontaktelement (16) zum Kontaktieren von Spulen (S₁ bis S_{N}; S₁ bis S_{N}, S₁' bis S_{N}') angeordnet ist.

9. Spulen-Anordnung nach Anspruch 8, **dadurch gekennzeichnet, dass** die mindestens eine Soll-Trennstelle (T) im Bereich des mindestens einen Kontaktelements (16) verläuft.

10. Spulen-Anordnung nach Anspruch 8 oder 9, **dadurch gekennzeichnet, dass** das mindestens eine Kontaktelement (16) einen ersten Kontaktbereich (K₁) und einen zweiten Kontaktbereich (K₂) umfasst, die in der Haupterstreckungsrichtung (15) voneinander beabstandet und durch einen Verbindungsbereich (V) miteinander verbunden sind.

11. Vorrichtung zur drahtlosen elektromagnetischen Energieübertragung, mit
- einer Sendereinheit (2) zum Senden von drahtlos übertragbarer Energie, und
- einer Empfängereinheit (3) zum Empfangen von drahtlos übertragener Energie,
wobei zumindest eine der Einheiten (2, 3) eine Spulen-Anordnung (9) nach mindestens einem der Ansprüche 1 bis 10 umfasst.

12. Bauteil-Spulen-Anordnung zur drahtlosen elektromagnetischen Energieübertragung, mit
- einem um eine Drehachse (12) drehbar gelagerten Bauteil (11), und
- einer Spulen-Anordnung (9) nach mindestens einem der Ansprüche 1 bis 10, wobei
-- das Trägerelement (14) mittels des Befestigungsmittels (17) an dem Bauteil (11) befestigt ist, und
-- die Spulen (S₁ bis S_{N}; S₁ bis S_{N}, S₁' bis S_{N}') um die Drehachse (12) angeordnet sind.

13. Verfahren zur Herstellung einer Bauteil-Spulen-Anordnung, umfassend die Schritte:
- Bereitstellen einer Spulen-Anordnung (9) nach mindestens einem der Ansprüche 1 bis 10, und
- Befestigen des Trägerelements (14) mittels des Befestigungsmittels (17) an einem um eine Drehachse (12) drehbar gelagerten Bauteil (11) derart, dass die Spulen (S₁ bis S_{N}; S₁ bis S_{N}, S₁' bis S_{N}') um die Drehachse (12) angeordnet sind.

## Claims

1. Coil arrangement for the wireless electromagnetic transmission of energy, having
- a carrier element (14) which forms a main direction of extent (15) and which comprises a ferrite material, and
- a plurality of coils (S₁ to S_{N}; S₁ to S_{N}, S₁' to S_{N}'), wherein at least a part of the coils (S₁ to S_{N}; S₁ to S_{N}, S₁' to S_{N}') are successively attached to the carrier element (14) in the main direction of extent (15) and connected to one another,
**characterized**
**in that** an attachment means (17) for the attachment to a component (11) is arranged on a side of the carrier element (14) facing away from the coils (S₁ to S_{N}; S₁ to S_{N}, S₁' to S_{N}'), and
**in that** the carrier element (14) comprises at least one desired parting location (T) which is designed as a perforation and/or notch.

2. Coil arrangement according to claim 1, **characterized in that** the carrier element (14) has a thickness D, wherein the following applies: 0.1 mm ≤ D ≤ 2.5 mm, in particular 0.5 mm ≤ D ≤ 2 mm, and in particular 1 mm ≤ D ≤ 1.5 mm.

3. Coil arrangement according to claim 1 or 2, **characterized in that** the carrier element (14) is of deformable design for arrangement on a curved surface (O) of a component (11).

4. Coil arrangement according to at least one of the preceding claims, **characterized**
**in that** the at least one desired parting location (T) is arranged between coils (S₁ to S_{N}; S₁ to S_{N}, S₁' to S_{N}') which are connected in series.

5. Coil arrangement according to at least one of the preceding claims, **characterized in that**
the carrier element (14) comprises a plurality of desired parting locations (T), which, in particular, are spaced apart in the main direction of extent (15).

6. Coil arrangement according to at least one of the preceding claims, **characterized in that**
the coils (S₁ to S_{N}; S₁ to S_{N}, S₁' to S_{N}') are wound in a spiral shape.

7. Coil arrangement according to at least one of the preceding claims, **characterized in that**
the coils (S₁ to S_{N}; S₁ to S_{N}, S₁' to S_{N}') each comprise two connecting contacts (Aᵢ, Aₒ) which are arranged offset with respect to one another by an angle α, wherein the following applies: 60° ≤ α ≤ 300°, in particular 90° ≤ α ≤ 270°, and in particular 120° ≤ α ≤ 240°.

8. Coil arrangement according to at least one of the preceding claims, **characterized in that**
at least one contact element (16) for forming contact with coils (S₁ to S_{N}; S₁ to S_{N}, S₁' to S_{N}') is arranged on the carrier element (14).

9. Coil arrangement according to claim 8, **characterized in that** the at least one desired parting location (T) runs in the region of the at least one contact element (16).

10. Coil arrangement according to claim 8 or 9, **characterized in that** the at least one contact element (16) comprises a first contact region (K₁) and a second contact region (K₂) which are spaced apart from one another in the main direction of extent (15) and are connected to one another by a connecting region (V).

11. Device for the wireless electromagnetic transmission of energy, having
- a transmitter unit (2) for transmitting energy which is transmittable in a wireless fashion, and
- a receiver unit (3) for receiving energy which is transmitted in a wireless fashion,
wherein at least one of the units (2, 3) comprises a coil arrangement (9) according to at least one of claims 1 to 10.

12. Component coil arrangement for the wireless electromagnetic transmission of energy, having
- a component (11) which is mounted so as to be rotatable about a rotational axis (12), and
- a coil arrangement (9) according to at least one of claims 1 to 10, wherein
-- the carrier element (14) is attached to the component (11) by means of the attachment means (17), and
-- the coils (S₁ to S_{N}; S₁ to S_{N}, S₁' to S_{N}') are arranged about the rotational axis (12).

13. Method for producing a component coil arrangement, comprising the steps of:
- providing a coil arrangement (9) according to at least one of claims 1 to 10, and
- attaching the carrier element (14) by means of the attachment means (17) to a component (11) which is mounted so as to be rotatable about a rotational axis (12) in such a way that the coils (S₁ to S_{N}; S₁ to S_{N}, S₁' to S_{N}') are arranged about the rotational axis (12).

## Revendications

1. Ensemble de bobines pour la transmission d'énergie électromagnétique sans fil, comprenant
- un élément de support (14) formant une direction d'extension principale (15) et comprenant un matériau de ferrite, et
- une pluralité de bobines (S₁ à S_{N}; S₁ à S_{N}, S₁' à S_{N}'), au moins une partie des bobines (S₁ à S_{N}; S₁ à S_{N}, S₁' à S_{N}') étant fixées successivement sur l'élément de support (14) dans la direction d'extension principale (15) et étant reliées entre elles,
**caractérisé en ce**
**que** sur un côté de l'élément de support (14) opposé aux bobines (S₁ à S_{N}; S₁ à S_{N}, S₁' à S_{N}') est disposé un moyen de fixation (17) pour la fixation sur un composant (11), et
**que** l'élément de support (14) comprend au moins un point de rupture de consigne (T) qui est réalisé sous forme de perforation et/ou d'encoche.

2. Ensemble de bobines selon la revendication 1, **caractérisé en ce que** l'élément de support (14) a une épaisseur D, où : 0,1 mm ≤ D ≤ 2,5 mm, notamment 0,5 mm ≤ D ≤ 2 mm, et notamment 1 mm ≤ D ≤ 1,5 mm.

3. Ensemble de bobines selon la revendication 1 ou 2, **caractérisé en ce que** l'élément de support (14) est conçu de manière déformable pour être disposé sur une surface courbe (O) d'un composant (11).

4. Ensemble de bobines selon au moins l'une quelconque des revendications précédentes, **caractérisé en ce**
**en ce que** l'au moins un point de rupture de consigne (T) est disposé entre des bobines (S₁ à S_{N}; S₁ à S_{N}, S₁' à S_{N}') montées en série.

5. Ensemble de bobines selon au moins l'une quelconque des revendications précédentes, **caractérisé en ce**
**que** l'élément de support (14) comprend plusieurs points de rupture de consigne (T), qui sont en particulier espacés dans la direction d'extension principale (15).

6. Ensemble de bobines selon au moins l'une quelconque des revendications précédentes, **caractérisé en ce**
**que** les bobines (S₁ à S_{N}; S₁ à S_{N}, S₁' à S_{N}') sont enroulées en spirale.

7. Ensemble de bobines selon au moins l'une quelconque des revendications précédentes, **caractérisé en ce**
**que** les bobines (S₁ à S_{N}; S₁ à S_{N}, S₁' à S_{N}') comprennent chacune deux contacts de raccordement (Aᵢ, Aₒ) qui sont décalés l'un par rapport à l'autre d'un angle α, où: 60° ≤ α ≤ 300°, en particulier 90° ≤ α ≤ 270°, et en particulier 120° ≤ α ≤ 240°.

8. Ensemble de bobines selon au moins l'une quelconque des revendications précédentes, **caractérisé en ce**
**qu'**au moins un élément de contact (16) est disposé sur l'élément de support (14) pour la mise en contact de bobines (S₁ à S_{N}; S₁ à S_{N}, S₁' à S_{N}').

9. Ensemble de bobines selon la revendication 8, **caractérisé en ce que** l'au moins un point de rupture de consigne (T) s'étend dans la zone de l'au moins un élément de contact (16).

10. Ensemble de bobines selon la revendication 8 ou 9, **caractérisé en ce que** l'au moins un élément de contact (16) comprend une première zone de contact (K₁) et une deuxième zone de contact (K₂) qui sont espacées l'une de l'autre dans la direction d'extension principale (15) et reliées entre elles par une zone de liaison (V).

11. Dispositif de transmission d'énergie électromagnétique sans fil, comprenant
- une unité d'émission (2) pour l'émission d'énergie transmissible sans fil, et
- une unité de réception (3) pour recevoir l'énergie transmise sans fil, dans lequel au moins l'une des unités (2, 3) comprend un ensemble de bobines (9) selon au moins l'une quelconque des revendications 1 à 10.

12. Ensemble composant-bobine pour la transmission d'énergie électromagnétique sans fil, comprenant
- un composant (11) monté à rotation autour d'un axe de rotation (12), et
- un ensemble de bobines (9) selon au moins l'une quelconque des revendications 1 à 10, dans lequel
-- l'élément de support (14) est fixé sur le composant (11) à l'aide du moyen de fixation (17), et
-- les bobines (S₁ à S_{N}; S₁ à S_{N}, S₁' à S_{N}') sont disposées autour de l'axe de rotation (12).

13. Procédé de fabrication d'un ensemble composant-bobine, comprenant les étapes consistant à :
- fournir un ensemble de bobines (9) selon au moins l'une quelconque des revendications 1 à 10, et
- fixer l'élément de support (14) à l'aide du moyen de fixation (17) à un composant (11) monté à rotation autour d'un axe de rotation (12) de telle sorte que les bobines (S₁ à S_{N}; S₁ à S_{N}, S₁' à S_{N}') soient disposées autour de l'axe de rotation (12).
